# EUROPÄISCHE PATENTSCHRIFT

(11) **EP 0 401 872 B1**
(45) Veröffentlichungstag und Bekanntmachung des Hinweises auf die Patenterteilung: **14.07.1993**
(21) Anmeldenummer: 90113480.9
(22) Anmeldetag: 23.03.1987
(51) Int. Cl.: B29C 45/17

(54) **Giessformwechseleinrichtung an Kunststoff-Spritzgiessmaschinen**
Mould exchanging apparatus for a plastic injection moulding machine
Dispositif de changement de moule pour une machine d'injection de matière plastique

(30) Priorität: 05.08.1986 DE 3626488
(43) Veröffentlichungstag der Anmeldung: 12.12.1990
(62) Teilanmeldung aus: 87104257.8
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- EP-A- 0 092 685
- EP-A- 0 164 062
- EP-A- 0 246 398
- DE-C- 3 508 866

## Beschreibung

Die Erfindung betrifft eine Gießformwechseleinrichtung entsprechend dem Oberbegriff des Patentanspruches 1.

Bei bekannten Wechseleinrichtungen dieser Art (japanische Patent-Offenlegungsschrift Nr. 55-67428 vom 21.05.1980; EP 0 092 685 A1, DE-U 84 35 785.1; US-PS 4,449,907) ist ein Transporttisch parallel zur Spritzachse in einer linearen Führung verfahrbar, was Voraussetzung für den Gießformwechsel als solchen, aber auch für den Abtransport der Spritzgießform ist. Dabei ist von Vorteil, daß der Transport der Spritzgießformen sowie ihr Transfer vom Spannraum auf den Transportwagen und umgekehrt in Brusthöhe und horizontal, also nicht 'über Kopf' erfolgt. Um den Abstand zwischen der im Spannraum der Kunststoff-Spritzgießmaschine befindlichen Spritzgießform und dem parallel zur Spritzachse verfahrenden Transporttisch zu überbrücken, verwenden die bekannten Gießformwechseleinrichtungen relativ aufwendige Gießformverschiebeeinrichtungen, die ebenso aufwendige und relativ schwer steuerbare Kupplungseinrichtungen erfordern, die gleichermaßen eine Automatisierung erschweren.

Es ist auch eine mit einer endlosen Kette arbeitenden Gießformverschiebevorrichtung an einer Gießformwechseleinrichtung entsprechend dem Gattungsbegriff bekannt (DE 32 42 054 C2). Bei dieser Gießformverschiebeeinrichtung ist jedoch als gesondertes Kupplungsglied zwischen Spritzgießform und Wechseltisch eine Kupplungsstange erforderlich, deren vertikale Kupplungszapfen in den Korpus der Spritzgießform eingreifen. Infolgedessen ist eine Abnahme der Spritzgießform vom Wechseltisch in horizontaler Richtung nicht möglich. Vielmehr ist es erforderlich, die Spritzgießform durch eine vertikale Transportbewegung vom Wechseltisch abzunehmen.

Ausgehend von dem genannten Stand der Technik liegt der Erfindung die Aufgabe zugrunde, eine Gießformwechseleinrichtung der eingangs genannten Art derart weiterzubilden, daß die Gießformverschiebevorrichtung des als Transportwagen dienenden Wechseltisches befähigt ist, die im Spannraum zwischen den Aufspannplatten bzw. zwischen der Wänden eines Depots befindliche Spritzgießform mittels einer endlosen Kette selbsttätig zu erfassen und auf den Transporttisch zu ziehen, um sie nach einer Transportbewegung zwischen die wände des Depots bzw. die Aufspannplatten des Spannraumes zu schieben und dort aus ihrer Kupplungsverbindung freizugeben.

Diese Aufgabe wird durch die im Kennzeichen des Anspruches 1 genannten Merkmale gelöst.

Bei einer solchen Lösung kann der Mitnehmer der in Kupplungsbereitschaft befindlichen Transportkette in das Kupplungsorgan einer auf den Wechseltisch zu ziehenden, also im Spannraum in Arbeitsposition befindlichen Spritzgießform eingesteuert werden, wobei das spritzgießmaschinenseitige Ende der die Verschiebeeinrichtung umfassenden baulichen Einheit geringfügig in den Spannraum hineinragt. Der Abstand der Kupplungsorgane der in den Spritzgießmaschinen bzw. im Depot abgestellten Spritzgießformen von der Symmetrieebene der Führung des Wechseltisches und somit der diesbezügliche Abstand der Spritzgießmaschinen vom Transportwagen kann besonders gering bemessen sein. Auf diese Weise kann der Platzbedarf der mit der Gießformwechseleinrichtung versehenen Spritzgießmaschine minimiert werden. Dies gilt auch dann, wenn mehrere Kunststoff-Spritzgießmaschinen von einer Gießformwechseleinrichtung bedient werden. Bei Bereitschaftsverschiebung wird in der Regel die auf dem Wechseltisch gekuppelte Spritzgießform mitgeführt. Dadurch wird der Startpunkt beim Transport einer Spritzgießform vom Wechseltisch auf ihren Arbeitsplatz in der Spritzgießmaschine bzw. in einen Depotstellplatz derart vorverlegt, daß die Spritzgießform in der Spritzgießmaschine bzw. im Depot in eine lagegerechte Position gelangt. Andererseits kann der Wechseltisch an einer oder mehreren Spritzgießmaschinen entlang fahren, ohne mit vorstehenden Teilen der Spritzgießmaschinen zu kollidieren, wenn sich die Verschiebeeinrichtung in Ruheposition befindet.

Bei einer Weiterbildung nach den Ansprüchen 2, 3 und 4 ergibt sich eine raumsparende Einordnung einer relativ kleinen Verschiebeeinrichtung in die Trägerplatte des Wechseltisches, wobei die Verschiebeeinrichtung an der Basis der Spritzgießform angreift. Nach Anspruch 5 ist ein fertigungstechnisch extrem einfaches Kupplungsorgan für die Spritzgießform vorgesehen.

Bei einer Ausbildung nach Anspruch 6 ist es prinzipiell möglich, auf dem als Transportwagen dienenden Wechseltisch zwei Spritzgießformen zu transportieren und unabhängig voneinander aus der Spritzgießmaschine bzw. aus dem Depot zu übernehmen bzw. dorthin zu übergeben.
Vom Gegenstand der deutschen Patentanmeldung DE-A 36 17 094 unterscheidet sich der Gegenstand der vorliegenden Patentanmeldung dadurch, daß ein Transportwagen unmittelbar entlang der Rückseite von Wechseltischen verfahrbar ist und das maschinenseitige Ende der Verschiebeeinrichtung in Kupplungsbereitschaftsposition im Bereich des Spannraumes an einer in Arbeitsposition befindlichen Spritzgießform angreift.

Die Erfindung wird dadurch nicht berührt, daß es an sich bekannt ist, bei dem Werkstückträger-Wechselsystem eines Werkstückbearbeitungszentrums zur Verschiebung von Werkstückpaletten zwischen einem stationären Paletten-Aufnahmetisch und einem linear verfahrbaren Bearbeitungstisch eine endlose Kette zu verwenden (Sonderdruck "Werner Transfercenter TC 660, TC 800, TC 1000 Das neue Kompaktkonzept"). Zwar wird dabei ebenfalls durch den Lauf der Kette des Mitnehmers in ein Kupplungsorgan der Werkstückpalette selbsttätig ein- bzw. ausgesteuert. Das eigentliche Problem der vorliegenden Erfindung,eine Spritzgießform aus dem Spannraum einer Spritzgießmaschine bzw. aus dem Inneren eines Depots herauszuziehen bzw. dorthin je mittels einer Verschiebeeinrichtung einzuschieben, die sich auf einem Transportwagen befindet, der entlang der Spritzgießmaschine und entlang des Depots verfahrbar ist, entfällt bei der bekannten Anordnung gänzlich. Andererseits weist der einschlägige STand der Technik aus, daß alle bisherigen Versuche, das genannte Problem zu lösen, in anderer Richtung, nämlich in Richtung des Einsatzes endlicher Zug- bzw. Schiebemittel in Verbindung mit gesondereten Kupplungseinrichtungen gingen (vergl. hierzu der oben genannte Stand der Technik).

Nachstehend wird die Gießformwechseleinrichtung anhand der Zeichnung beschiereben.

Es zeigen:

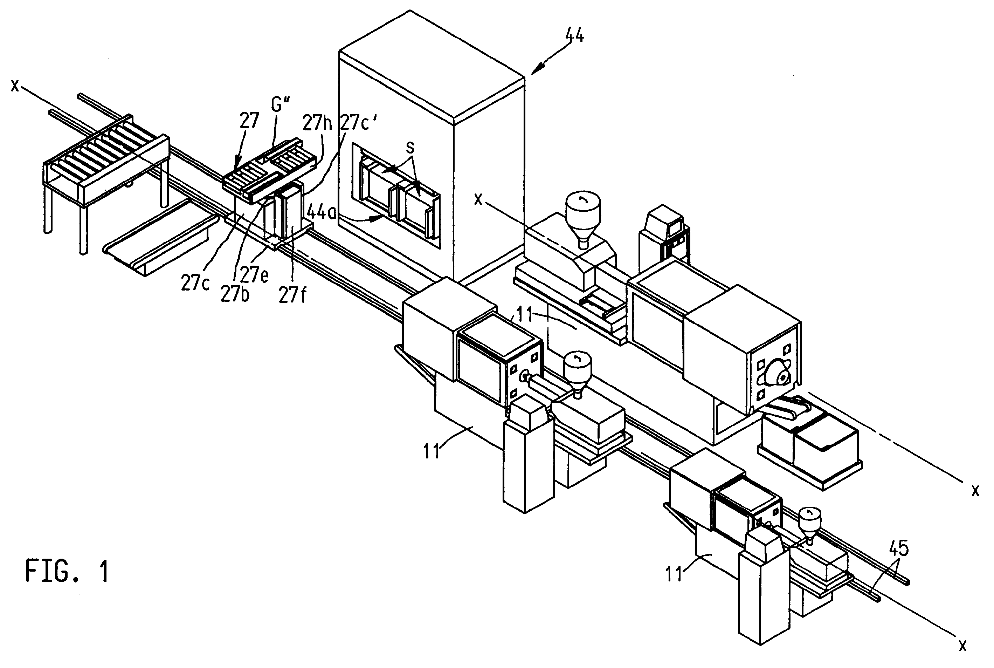

- Fig. 1: die Gießformwechseleinrichtung in perspektivischer Darstellung,
- Fig. 2: einen Ausschnitt aus der Gießformwechseleinrichtung im Bereich der Transportbahn zwischen Formspannraum und Wechseltisch in Draufsicht,
- Fig. 3: einen Vertikalschnitt durch die Verschiebeeinrichtung in vergrößerter Darstellung (mit abgestellter Spritzgießform),
- Fig. 4: einen Schnitt nach Linie IV-IV von Fig.2,
- Fign.5, 5a, 5b: je einen Ausschnitt aus dem Wechseltisch in Anschlußpsition an einem Depotstellplatz,

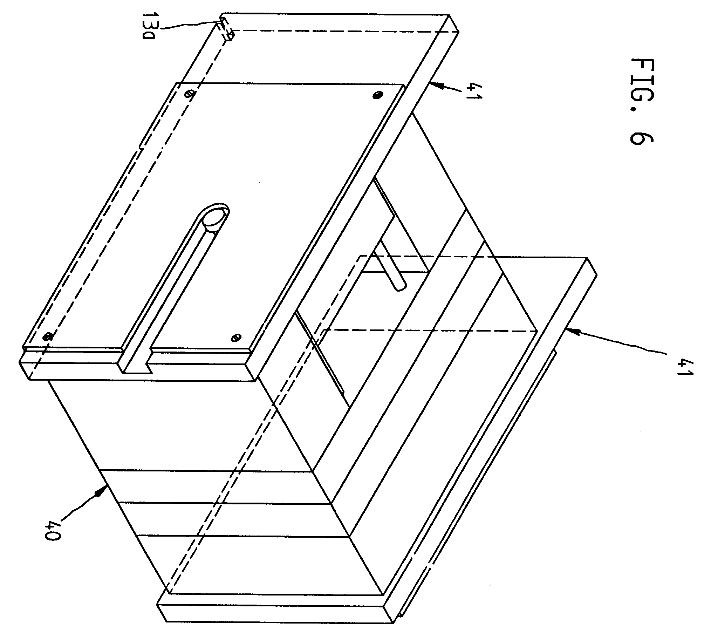

- Fig. 6: eine vergrößerte Spritzgießform der Gießformwechseleinrichtung in perspektivischer Darstellung und
- Fig. 7- 9: Schematas der Gießformwechseleinrichtung zur Verdeutlichung des Wechselverfahrens.

Die Gießformwechseleinrichtung ermöglicht einen computergesteuerten Wechsel der Gießform an einer oder mehreren Kunststoff-Spritzgießmaschinen (Spritzgießmaschinen), die einem Gießformdepot raumsparend zugeordnet sind, wobei auch die Transportbewegungen zum und vom Gießformdepot eingeschlossen sind. Die Spritzgießmaschine bzw. die Spritzgießmaschinen weisen je einen quaderförmigen Maschinenfuß 11 auf. Die Spritzgießmaschine bzw.die Spritzgießmaschinen sind beidseits entlang der aus zwei Schienen bestehenden linearen Führung 45 des Wechseltisches 27 derart ausgerichtet, daß ihre Rückseiten der Führung 45 zugewandt sind und ihre Spritzachsen x-x parallel zur Führung 45 und, im Falle identischer Spritzgießmaschinen, koaxial zueinander liegen.

Der Gießformwechseltisch 27 kann zwei Gießformstellplätze aufweisen, die je mit einer Gießformführung G'' und einer Gießformverschiebevorrichtung 20, 21, 26 G'' versehen sind, die ihrerseits an einem Kupplungsorgan (Quernut 13a) der Spritzgießform S angreift. Der Gießformwechseltisch 27 ist auf seiner Führung 45 wahlweise in eine Anschlußposition am Formspannraum F einer Spritzgießmaschine oder in eine Anschlußposition an einem Gießformstellplatz 44a verfahrbar. Die vertikale Symmetrieebene des Gießformwechseltisches 27 fällt mit der vertikalen Symmetrieebene y-y der Führung 45 zusammen. Auf jeder Symmetriehälfte ist ein Gießformstellplatz derart angeordnet, daß dessen Gießformführung G'' und dessen Gießformverschiebevorrichtung (Transportkette 20) spiegelsymmetrisch zur Symmetrieebene y-y liegt.

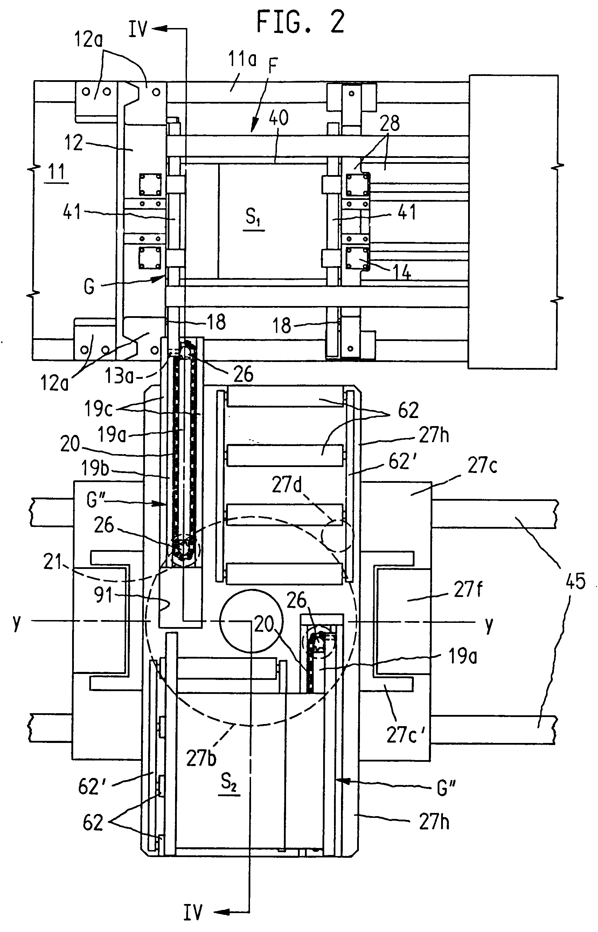

Der Wechseltisch 27 ist mittels einer Fußplatte 27e in der durch zwei im Boden verlegte Schienen gebildeten Führung 45 geführt. In der Fußplatte 27e sind zwei symmetrisch zur Symmetrieebene y-y (Fig. 2,5,7) der Führung 45 angeordnete vertikale Säulen 27f verankert. AN den Säulen 27f ist ein als Gehäuse ausgebildeter, blockartiger Schlitten 27c mittels U-Schienen 27c' vertikal führbar. Auf dem Schlitten 27c ist eine Trägerplatte 27h von etwa rechtwinkligem Grundriß mittels einer Drehscheibe 27b um 180° drehbar gelagert. In der Trägerplatte 27h sind die beiden identischen und spiegelsymmetrisch zur Symmetrieebene y-y angeordneten Gießformführungen G'' und die zugehörigen Gießformverschiebevorrichtungen des Wechseltisches 27 angeordnet, wie insbesondere aus der Fig. 2 erkennbar. Im Schlitten 27c ist der den Wechsel der Spritzgießformen S steuernde Computer untergebracht. Eine vertikale, rotierbare Antriebswelle eines im Schlitten 27c versenkten Motors kämmt über ein Ritzel 27d mit einem Zahnkranz der Drehscheibe 27b.

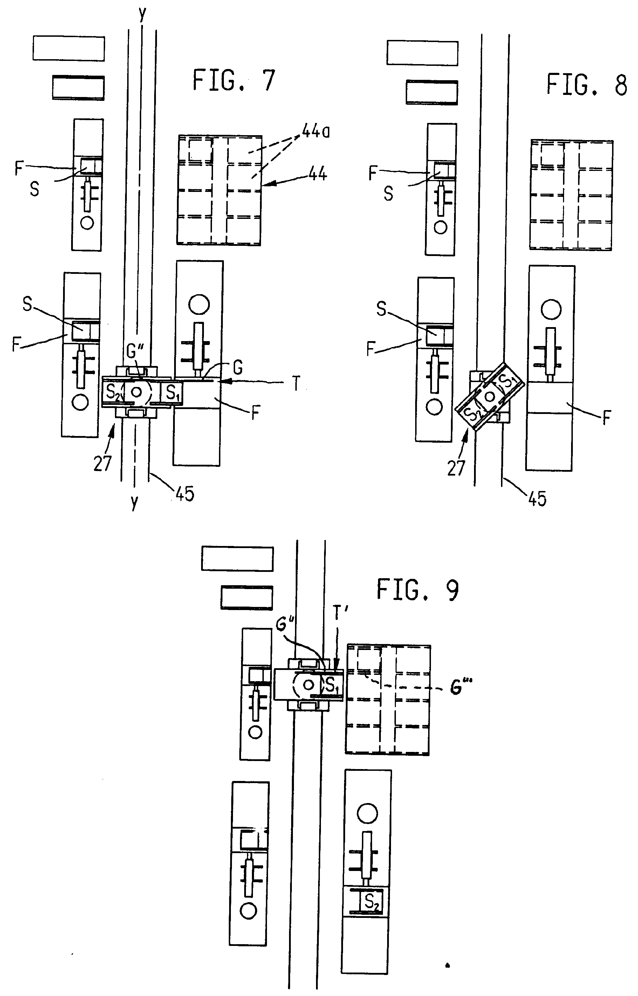

Die beiden miteinander identischen Gießformverschiebevorrichtungen des Wechseltisches 27 sind durch zwei endlose, bei vertikaler Drehachse umlaufende Transportketten 20 gebildet. Diese sind wie die Gießformführungen G'' spiegelsymmetrisch zur vertikalen Symmetrieebene y-y in der Trägerplatte 27h angeordnet. Die beiden Gießformführungen G'' des Wechseltisches 27 sind je durch Führungsleisten 19a, 19b gebildet, zwischen welche die eine Anlageplatte 41 der Spritzgießform S zur Führung eintaucht. Das mitnehmende Trumm der Transportkette 20 verläuft an der Unterkante dieser Anlageplatte 41. Ein vertikaler Mitnehmer 20a dieses Trumms ist mit dem Kupplungsorgan dieser Anlageplatte 41 kuppelbar. Die andere Anlageplatte 41 ist auf Stützrollen 62 des betreffenden Gießformstellplatzes abgestützt, die in Lagerleisten 62' drehbar gelagert sind. Da die Transportkette 20, die Führungsleisten 19a, 19b und die Stützrollen 62 auf der einen Symmetriehälfte des Wechseltisches 27 spiegelsymmetrisch zu den genannten Organen auf der anderen Symmetriehälfte eines Wechseltisches 27 angeordnet sind, ist die Transportkette 20 auf dem einen Gießformstellplatz des Wechseltisches 27 an der linken Längskante und am anderen Stellplatz an der rechten Längskante angeordnet (Fig. 2). Die genannte spiegelsymmetrische Anordnung von Transportkette 20, Führungsleisten 19a, 19b und Stützrollen 62 zur Symmetrieebene y-y stellt sicher, daß die genannten Bauteile der hinteren Symmetriehälfte sich nach Drehung der Trägerplatte 27h um 180° in gleichem räumlichen Verhältnis zum benachbarten Formspannraum F oder zum benachbarten Gießformstellplatz 44a befinden wie die genannten Bauteile auf der anderen Symmetriehälfte vor der Drehung. Aus diesem Grunde bilden die beiden Gießformführungen G'' des Wechseltisches 27 in jedem Falle mit der Gießformführung G im benachbarten Formspannraum F bzw. mit der Gießformführung G‴ eines Depotstellplatzes 44 wechselweise eine identische Transportbahn T;T' wie insbesondere aus den Fign. 7,9 erkennbar.

Die Spritzgießformen S können von unterschiedlicher Größe sein, umfassen jedoch in jedem Fall einen aus genormten Platten zusammengesetzten quaderförmigen Gießformkörper 40 und zwei diesen Gießformkörper 40 begrenzende Anlageplatten 41. Eine der beiden Anlageplatten 41 ist mit einer als Kupplungsorgan dienenden Quernut 13a von rechteckigem Querschnitt versehen. Da die Anlageplatten 41 den Gießformkörper 40 weit nach hinten überragen und die genannte Quernut 13a in unmittelbarer Nähe der vertikalen Stirnkante angeordnet ist, befindet sich diese Quernut 13a einer im Formspannraum F befindlichen Spritzgießform S derart im Bereich des Mitnehmers 20a der benachbarten Transportkette 20 des Wechselttisches 27, daß diese Transportkette 20 im Gefolge seiner Bewegung auf dem Radius des zugehörigen Umlenkrades 26 seitlich in die Quernut 13a hineingelangt.

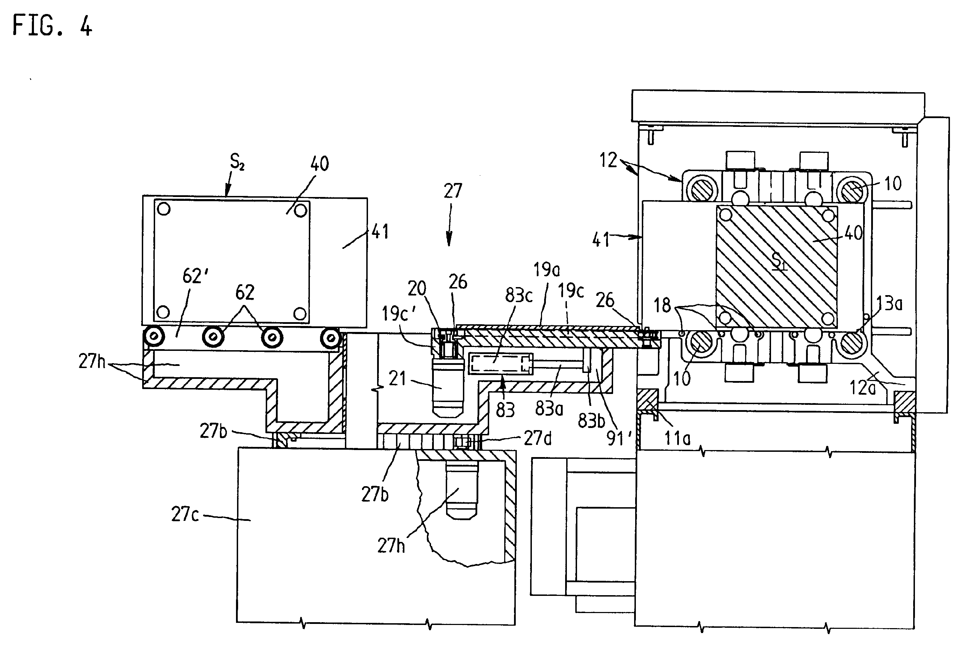

Die Mitnehmer 20a der Transportkette 20 sind durch Gelenkbolzen dieser Kette gebildet und überragen die Oberfläche der Trägerplatte 27h nach oben. An dem vom Formspannraum F bzw. vom Depotstellplatz 44a abgewandten Ende jeder Transportkette 20 ist in einem Aufnahmeteil 19c' der Verschiebeleiste 19c ein Antriebsmotor 21 angeordnet (Fig. 4). Der zeitgerechte Antrieb der Transportketten 20 ist durch Steuerelemente steuerbar, die an diesen befestigt sind und über Steuerlappen mit Start-Stop-Schaltern des Wechseltisches 27 zusammenwirken.

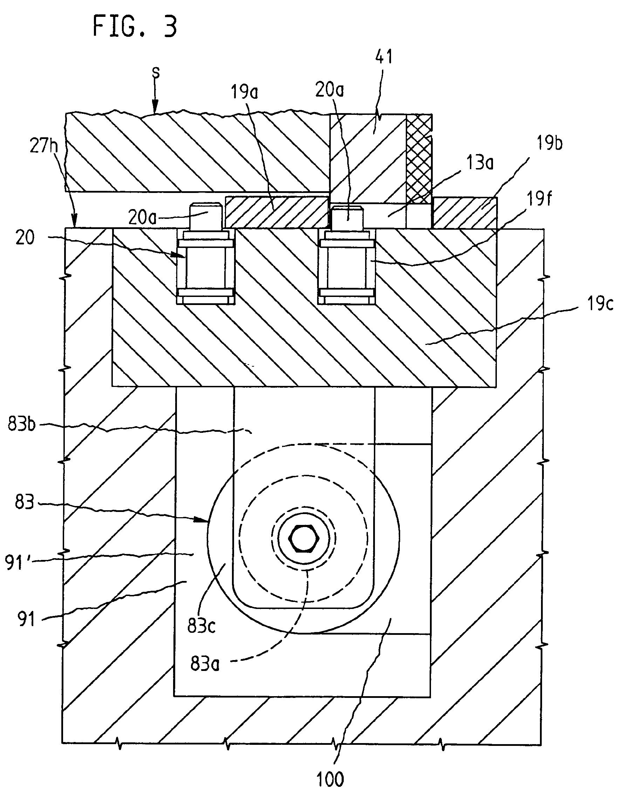

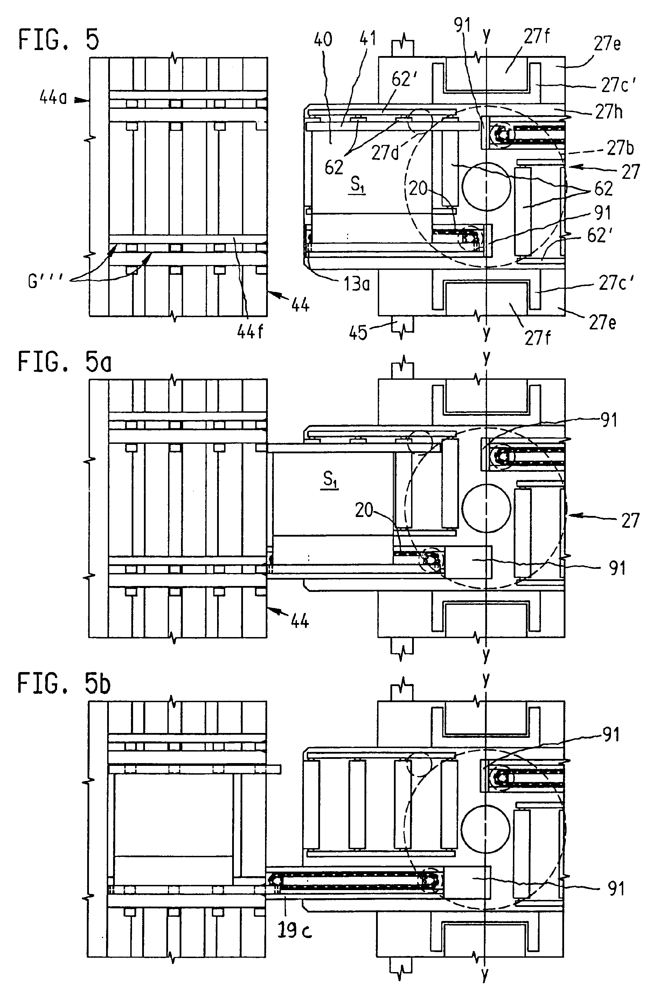

Wie insbesondere aus Fig. 3 in Verbindung mit den Fign. 4, 5b ersichtlich, sind die beiden Transportketten 20 mit ihren Umlenkrädern 26 in einer Verschiebeleiste 19c gelagert, die ihrerseits in einem Führungslager 91 der Trägerplatte 27h des Wechseltisches 27 verschiebbar ist. Zwischen den beiden Trummen der Transportkette 20 ist die Führungsleiste 19a von rechteckigem Querschnitt auf der Oberfläche der Verschiebeleisten 19c befestigt. Das gleiche gilt für die weitere Führungsleiste 19b, die von der Führungsleiste 19a im Abstand der Breite der Anlageplatte 41 angeordnet ist, wie aus Fig. 3 erkennbar. Die Anlageplatte 41 ist zwischen den einander zugewandten vertikalen Längskanten der beiden Führungsleisten 19a und 19b geführt. Der Mitnehmer 20a des unterhalb der Anlageplatte 41 geführten Trumms der Transportkette 20 taucht zur Verwirklichung einer Kupplung in das Kupplungsorgan der Spritzgießform S, nämlich in die Quernut 13a der Anlageplatte 41 der Kupplung ein. Somit bilden die Verschiebeleiste 19c, die Transportkette 20 mit ihren Umlenkrädern 26 und dem zugehörigen Antriebsmotor 21 eine im Führungslager 91 in Richtung der jeweils benachbarten Spritzgießform verschiebbare bauliche Einheit, mit welcher eine auf dem Wechseltisch 27 ruhende Spritzgießform S über den Mitnehmer 20a der Transportkette 20 gekoppelt ist. Unterhalb der Verschiebeleiste 19c ist ein einem Hohlraum 91' der Trägerplatte 27h ein Hydraulikzylinder 83 angeordnet, der zur Verschiebung der vorgenannten baulichen Einheit dient. Der eigentliche Hydraulikzylinder 83c ist mittels eines Befestigungsstückes 100 starr mit der Trägerplatte 27h verbunden. Die Kolbenstange 83a des Hydraulikzylinders 83 greift über ein Verbindungsstück 83b an der Unterseite der Verschiebeleiste 19c zur Mitnahme an.

Die Bedeutung der linearen Verschiebbarkeit der im wesentlichen durch die Transportkette 20 gebildeten und in der Verschiebeleiste 19c zu einer Einheit zusammengefaßten Gießformverschiebevorrichtung eines jeden Stellplatzes des Wechseltisches 27 liegt in folgendem:
Bei der Fahrt des Wechseltisches von einer Spritzgießmaschine zum Depot 44 und umgekehrt finden sich die beiden Gießformverschiebevorrichtungen in rückwärtiger Position, also in Ruhestellung. Dadurch kann der Wechseltisch 27 ungehindert an den Spritzgießmaschinen bzw. an dem das Depot bildenden Schrank entlangfahren. Soll nun eine Spritzgießform S von einer Spritzgießmaschine auf dem benachbarten leeren Stellplatz eines in Anschlußposition gefahrenen Wechseltisches 27 übernommen werden, so ist die betreffende Gießformverschiebevorrichtung zuerst aus ihrer Ruhestellung, bei welcher das vordere Umlenkrad der Transportkette die Trägerplatte 27h des Wechseltisches 27 nach vorne nicht überragt (Fig. 5), durch eine Bereitschaftsverschiebung in eine Kupplungsbereitschafts-Position (Fig. 5a, 5b, 4) zu überführen, in welcher die Verschiebeleiste 19c (Fig. 3,4) die Trägerplatte 27h des WEchseltisches 27 nach vorne überragt und demzufolge sich das vordere Ende der Transportkette im Bereich des Umlenkrades 26 unmittelbar neben der Quernut 13a der Anlageplatte 41 der anzukuppelnden Spritzgießform S befindet, und zwar derart, daß der Mitnehmer 20a der Transportkette 20 bei beginnendem Lauf dieser Transportkette seitlich in die genannte Quernut 13a in eine Kupplungsposition (Fig.3) eingesteuert werden kann. Soll eine auf dem vorderen Stellplatz des Wechseltisches 27 abgestellte Spritzgießform S in die zugehörige Spritzgießmaschine bzw. in einen Depotstellplatz 44a; 44a' überführt werden, kann ebenfalls eine Bereitschaftsverschiebung im obigen Sinne erforderlich sein, denn diese Bereitschaftsverschiebung ist die Voraussetzung dafür, daß die zu transportierende Spritzgiessform S bzw. Transporteinheit eine lagegerechte Position auf dem Depotstellplatz 44a bzw. in der Spritzgießmaschine erreicht, indem gewissermaßen der Startpunkt bei Verschiebung der Spritzgießform S durch die genannte Bereitschaftsverschiebung auf dem Wechseltisch 27 vorverlegt wird.

Im Schema der Fig. 7 wird gerade eine auszuwechselnde Spritzgießform S1 vom Formspannraum F einer Spritzgießmaschine auf den leeren, benachbarten Stellplatz des in Anschlußposition gefahrenen Wechseltisches 27 überführt. Eine einzuwechselnde Spritzgießform S2 befindet sich auf dem rückwärtigen Stellplatz des Wechseltisches, die aus dem Depot 44 stammt. In Fig. 8 ist verdeutlicht, wie durch eine Drehung des Wechseltisches 27 um 180° die nunmehr auf den vorderen Stellplatz des Wechseltisches 27 gelangte Spritzgießform S1 in eine Position gelangen kann, wie sie zuvor (in Fig. 7) von der einzuwechselnden Spritzgießform S2 eingenommen worden ist, während diese einzuwechselnde Spritzgießform S2 in eine Position gelangt, in welcher zuvor die auszuwechselnde Spritzgießform S1 war. Fig. 9 zeigt ein Stadium des Gießformwechsels, in welchem die einzuwechselnde Spritzgießform S2 bereits vom benachbarten Stellplatz des Wechseltisches 27 in den Formspannraum F gelangt und dieser Wechseltisch 27 in Anschlußposition an einen leeren Depotstellplatz gefahren und seine Trägerplatte 27h um 180° gedreht ist. Auf einer nunmehr durch die Gießformführung G‴ des genannten Depotstellplatzes 44a und die benachbarte Gießformführung G'' des Wechseltisches 27 gebildeten Transportbahn T' kann die ausgewechselte Spritzgießform S1 in den Depotstellplatz 44a eingefahren werden.

Die Gießformführung G im Formspannraum F ist durch Stützelemente 18 beider Formträger 12, 28 und durch deren Aufspannflächen gebildet.

In den Fign. 5, 5a und 5b sind zeitlich aufeinanderfolgende Stadien der Überführung einer Spritzgießform S vom Wechseltisch 27 auf einen Depotstellplatz 44a gezeigt. In Fig. 5 befindet sich die Spritzgießform in einer für die Fahrt des Wechseltisches auf der Führung 45 geeigneten Lage auf ihrem Stellplatz. In Fig. 5a ist die Verschiebeleiste 19c mit den in ihr zu einer Einheit zusammengefaßten Organen der Verschiebeeinrichtung zusammen mit der an die Transportkette 20 angekuppelten Spritzgießform aus der rückwärtigen Ruhestellung in die vordere Kupplungsbereitschafts-Stellung verschoben. Erst in dieser Position wird die Transportkette 20 in Lauf gesetzt, so daß die Spritzgießform, wie aus Fig. 5b ersichtlich, in eine lagegerechte Position auf den Gießformstellplatz 44a geschoben wird.

## Patentansprüche

1. Gießformwechseleinrichtung einer Kunststoff-Spritzgießmaschine, die eine im Formspannraum der Formschließeinheit einspannbare Spritzgießform und eine von dieser in Absetzposition absetzbare horizontale Spritzgießeinheit aufweist, mit einem als Transportwagen dienenden Gießformwechseltisch (27) mit wenigstens einem Gießformstellplatz, der mit einer an einem Kupplungsorgan der Spritzgießform (S) angreifenden Gießform-Verschiebevorrichtung (20,21,26, G'') versehen ist, wobei der Gießformwechseltisch (27) derart parallel zur Spritzachse (x-x) in einer linearen Führung (45) rückseitig an der Spritzgießmaschine oder an einem Gießformdepot (44) in Anschlußposition verfahrbar ist, daß eine Gießformführung (G'') der Gießform-Verschiebevorrichtung (20,21,26, G'') wechselweise mit der Gießformführung (G) im Formspannraum (F) und mit einer Gießformführung (G‴) eines Depotstellplatzes (44a) eine quer zur Spritzachse (x-x) verlaufende Transportbahn (T,T') bilden, auf welcher die Spritzgießform (S) mittels eines an ihr angeordneten Leitelementes (41) verschiebbar ist,
dadurch gekennzeichnet, daß die eine endlose Transportkette (20) mit Antriebsmotor (21), Umlenkräder (26) und die Gießformführung (G'') umfassende Gießform-Verschiebevorrichtung (20,21,26,G'') des Wechseltisches (27) als bauliche Einheit mit Hilfe eines Antriebes (83) in einem Führungslager (91) einer den Stellplatz bildenden Trägerplatte (27h) aus einer Ruheposition, in welcher die Transportkette (20) innerhalb der Grundfläche der Trägerplatte (27h) liegt, in eine Kupplungsbereitschaftsposition verschiebbar ist, in welcher die Transportkette (20) die Grundfläche der Trägerplatte (27h) überragt und ein Umlenkrad (26) im Bereich des Spannraumes (F) der Kunststoff-Spritzgießmaschine bzw. des Depotstellplatzes (44a) liegt.

2. Gießformwechseleinrichtung nach Anspruch 1, dadurch gekennzeichnet, daß die Transportkette (20) mit ihren Umlenkrädern (26) und die Gießformführung (G'') in einer Verschiebeleiste (19c) gelagert sind, die im Führungslager (91) verschiebbar ist.

3. Gießformwechseleinrichtung nach Anspruch 2, dadurch gekennzeichnet, daß die Gießformführung (G'') durch zwei Transportleisten (19a,19b) gebildet ist, von welchen eine (19a) zwischen den beiden Trummen der Transportkette (20) und die andere (19b) neben dem randständigen Trumm der Transportkette (20) liegt, wobei der Abstand zwischen den beiden Trummen etwa der Dicke des durch die Anlageplatte (41) der Spritzgießform (S) gebildeten Leitelementes entspricht, wobei die Führungsleisten (19a,19b) auf der Verschiebeleiste (19c) angeordnet sind.

4. Gießformwechseleinrichtung nach einem der vorhergehenden Ansprüche, gekennzeichnet durch eine derartige Anordnung der Verschiebeeinrichtung (20,21,26,G'') in dem Führungslager (91), daß nur die vertikalen Mitnehmer (20a) der Transportkette (20) die Oberfläche der Trägerplatte (27h) des Wechseltisches (27) überragen.

5. Gießformwechseleinrichtung nach Anspruch 4, dadurch gekennzeichnet, daß die Mitnehmer (20a) bei ihrer kreisförmigen Bewegung am Umlenkrad (26) in eine als Kupplungsorgan der Spritzgießform (S) dienende Quernut (13a) der Anlageplatte (41) der Spritzgießform (S) einsteuerbar sind.

6. Gießformwechseleinrichtung nach einem der vorhergehenden Ansprüche, dadurch gekennzeichnet, daß der Wechseltisch (27) mit zwei Gießformstellplätzen versehen ist, die je mit einer Gießform-Verschiebevorrichtung (20,21,26,G'') versehen sind, wobei die miteinander identischen Gießform-Verschiebevorrichtungen der Stellplätze spiegelsymmetrisch zur vertikalen Symmetrieebene (y-y) des Wechseltisches (27) in der drehbaren Trägerplatte (27b) angeordnet sind und an ihrem maschinenseitigen Ende in die Grundrißfläche des Maschinenfußes (11) hineinragt.

7. Gießformwechseleinrichtung nach einem der vorhergehenden Ansprüche, dadurch gekennzeichnet, daß die Transportkette (20) vertikale Kupplungszapfen (20a) aufweist, die zwecks Kupplung je in eine Quernut (13a) der Anlageplatte (41) der zu verschiebenden Spritzgießform (S) im Gefolge einer kreisbogenförmigen Bewegung am Umlenkrad der Transportkette einsteuerbar sind.

## Claims

1. Mould changeover arrangement for a plastics material injection moulding machine, which includes an injection mould assembly, which is clampable in position in the mould clamping area of the mould closing device, and a horizontal injection moulding unit, which can be deposited in the deposit position by said injection mould assembly, such mould changeover arrangement including a mould changeover table (27), which serves as a conveyor carriage and is provided with at least one mould emplacement, which is provided with a mould displacement device (20, 21, 26, G'') engaging with a coupling member of the injection mould assembly (S), the mould changeover table (27) being displaceable into its connection position parallel to the injection axis (x-x) in a linear guide (45) at the rear end of the injection moulding machine or a mould storage unit (44) in such a manner that a mould guide member (G'') of the mould displacement device (20, 21, 26, G'') forms a conveyor path (T, T') alternately with the mould guide member (G) in the mould clamping area (F) and with a mould guide member (G‴) of a deposit emplacement (44a), such conveyor path extending transversely relative to the injection axis (x-x), and the injection mould assembly (S) is displaceable on such conveyor path by means of a guide element (41) disposed thereon, characterised in that the mould displacement device (20, 21, 26, G'') of the changeover table (27), which device includes an endless conveyor chain (20) with drive motor (21), guide wheels (26) and the mould guide member (G'') and serves as a structural unit, is displaceable, by means of a drive (83) in a guide bearing (91) of a carrier plate (27h), which forms the emplacement, from a position of rest, in which the conveyor chain (20) lies within the outline of the carrier plate (27h), into a coupling standby position, in which the conveyor chain (20) protrudes beyond the outline of the carrier plate (27h), and a guide wheel (26) lies in the region of the clamping area (F) of the plastics material injection moulding machine or depot emplacement (44a).

2. Mould changeover arrangement according to claim 1, characterised in that the conveyor chain (20), with ts guide wheels (26), and the mould guide member (G'') are mounted in a displaceable bar (19c), which is displaceable in the guide bearing (91).

3. Mould changeover arrangement according to claim 2, characterised in that the mould guide member (G'') is formed by two conveyor bars (19a, 19b), one of which bars (19a) lies between the two portions of the conveyor chain (20), and the other bar (19b) lies adjacent the edge portion of the conveyor chain (20), the spacing between the two portions substantially corresponding to the thickness of the guide element formed by the abutment plate (41) of the injection mould assembly (S), the guide bars (19a, 19b) being disposed on the displaceable bar (19c).

4. Mould changeover arrangement according to one of the preceding claims, characterised in that the displacement device (20, 21, 26, G'') is so disposed in the guide bearing (91) that only the vertical entrainment means (20a) of the conveyor chain (20) protrude beyond the surface of the carrier plate (27h) of the changeover table (27).

5. Mould changeover arrangement according to claim 4, characterised in that, during their circular movement on the guide wheel (26), the entrainment means (20a) are guidable into a transverse groove (13a), which is provided in the abutment plate (41) of the injection mould assembly (S) and serves as a coupling means of the injection mould assembly (S).

6. Mould changeover arrangement according to one of the preceding claims, characterised in that the changeover table (27) is provided with two mould emplacements which are each provided with a mould displacement device (20, 21, 26, G''), the mould displacement devices of the emplacements being identical to each other and being disposed in the rotatable carrier plate (27b) in a mirror-symmetrical manner relative to the vertical plane of symmetry (y-y) of the changeover table, and the end of such devices facing the machine protrudes into the surface area of the machine base (11).

7. Mould changeover arrangement according to one of the preceding claims, characterised in that the conveyor chain (20) has vertical coupling pins (20a) which, for coupling purposes, are each guidable into a transverse groove (13a) in the abutment plate (41) of the injection mould assembly (S), which is to be displaced, as a result of an arcuate movement on the guide wheel of the conveyor chain.

## Revendications

1. Dispositif de changement des moules d'une machine de moulage de matière plastique par injection qui comporte un moule de moulage par injection pouvant être serré dans l'espace de serrage des moules de l'unité de fermeture des moules et une unité de moulage par injection horizontale pouvant être posée par elle en position de dépose, et qui comprend une table de changement des moules (27) servant de chariot transporteur et comprenant au moins un emplacement destiné aux moules, lequel est muni d'un dispositif de déplacement des moules (20, 21, 26, G'') venant en prise avec un organe d'accouplement du moule de moulage par injection (S), cependant que la table de changement (27) peut être déplacée parallèlement à l'axe d'injection (x-x) dans un guidage rectiligne (45) situé du côté arrière pour être amenée dans une position de raccordement à la machine de moulage par injection ou à un dépôt de moules (44), et ce, d'une manière telle qu'un guidage de moules (G'') du dispositif de déplacement des moules (20, 21, 26, G'') constitue alternativement, avec le guidage de moules (G) présent dans l'espace de serrage des moules (F) et avec un guidage de moules (G‴) d'un emplacement de dépôt (44a), une voie de transport (T, T') qui s'étend transversalement par rapport à l'axe d'injection (x-x) et sur laquelle le moule de moulage par injection (S) peut être déplacé au moyen d'un élément conducteur (41) disposé sur lui, caractérisé par le fait que le dispositif de déplacement des moules (20, 21, 26, G'') de la table de changement (27), lequel comprend une chaîne transporteuse (20) munie d'un moteur d'entraînement (21), des roues de renvoi (26) et le guidage de moules (G''), est réalisé sous la forme d'une unité modulaire et qu'il peut être déplacé, à l'aide d'un entraînement (83) situé dans un logement de guidage (91) d'une plaque porteuse (27h) constituant l'emplacement, depuis une position de repos dans laquelle la chaîne transporteuse (20) est située à l'intérieur de la surface de base de la plaque porteuse (27h), jusque dans une position où il est prêt à l'accouplement, dans laquelle la chaîne transporteuse (20) fait saillie au-delà de la surface de base de la plaque porteuse (27h) et dans laquelle une roue de renvoi (26) est située dans la région de l'espace de serrage (F) de la machine de moulage de matière plastique par injection ou, respectivement, de l'emplacement de dépôt (44a).

2. Dispositif de changement des moules selon la revendication 1, caractérisé par le fait que la chaîne transporteuse (20) est montée, avec ses roues de renvoi (26) et avec le guidage de moules (G''), dans une barre coulissante (19c) qui peut être déplacée dans le logement de guidage (91).

3. Dispositif de changement des moules selon la revendication 2, caractérisé par le fait que le guidage de moules (G'') est constitué par deux baguettes de guidage (19a, 19b) dont l'une (19a) est située entre les deux brins de la chaîne transporteuse (20) et dont l'autre (19b) est située à côté du brin de la chaîne transporteuse (20) qui est du côté du bord, cependant que la distance entre les deux brins correspond à peu près à l'épaisseur de l'élément conducteur constitué par la plaque d'appui (41) du moule de moulage par injection (S), et que les baguettes de guidage (19a, 19b) sont disposées sur la barre coulissante (19c).

4. Dispositif de changement des moules selon l'une des revendications précédentes, caractérisé par une disposition du dispositif de déplacement (20, 21, 26, G'') dans le logement de guidage (91) qui est telle que seuls les taquets d'entraînement verticaux (20a) de la chaîne transporteuse (20) fassent saillie au-delà de la surface de la plaque porteuse (27h) de la table de changement (27).

5. Dispositif de changement des moules selon la revendication 4, caractérisé par le fait que les taquets d'entraînement (20a) peuvent être commandé, lors de leur déplacement circulaire sur la roue de renvoi (26), de façon à ce qu'ils pénètrent dans une rainure transversale (13a) de la plaque d'appui (41) du moule de moulage par injection (S), laquelle sert d'organe d'accouplement au moule de moulage par injection (S).

6. Dispositif de changement des moules selon l'une des revendications précédentes, caractérisé par le fait que la table de changement (27) est pourvue de deux emplacements destinés aux moules qui sont munis chacun d'un dispositif de déplacement des moules (20, 21, 26, G''), cependant que les dispositifs de déplacement des moules identiques entre eux des emplacements sont disposés dans la plaque porteuse tournante (27h) en étant inversement symétriques par rapport au plan de symétrie vertical (y-y) de la table de changement (27), et qu'ils font saillie dans la surface en projection verticale du socle (11) de la machine à leur extrémité située du côté de la machine.

7. Dispositif de changement des moules selon l'une des revendications précédentes, caractérisé par le fait que la chaîne transporteuse (20) comporte des goujons d'accouplement (20a) verticaux dont chacun, en vue de l'accouplement, peut être commandé de façon à pénétrer dans une rainure transversale (13a) de la plaque d'appui (41) du moule de moulage par injection à déplacer (S), à la suite d'un déplacement en arc de cercle sur la roue de renvoi de la chaîne transporteuse.
